# EUROPEAN PATENT APPLICATION

(11) **EP 4 850 988 A1**
(43) Date of publication of application: **09.12.2026**
(21) Application number: 26173084.0
(22) Date of filing: 17.04.2026
(51) Int. Cl.: B60R 16/02, B60K 1/00, B60L 3/00, B60L 50/60, B60K 1/04

(54) **ELECTRIC VEHICLE**

(30) Priority: 03.06.2025 JP 2025092670
(71) Applicant: Suzuki Motor Corporation, Hamamatsu-shi, Shizuoka 432-8611 (JP)
(72) Inventor: KUNIMATSU, Hideki, Hamamatsu-shi, 432-8611 (JP); ISHIGAMI, Ryusei, Hamamatsu-shi, 432-8611 (JP)
(74) Representative: Haseltine Lake Kempner LLP

(57) **Abstract**

[Problem to be Solved]

There is provided an electric vehicle that can protect a wire harness during a front-end collision of the vehicle.

[Solution]

A driving device (4) includes a driving case (11) having a motor accommodation portion (11A), which accommodates a motor generator (5), and an inverter accommodation portion (11B), which accommodates an inverter (6) disposed above the motor generator (5). The driving case (11) has a pair of protruding portions (11E, 11F) that protrude to a rear of a vehicle (1) and a recessed portion (11G) between the pair of protruding portions (11E, 11F), at a rear edge portion of the inverter accommodation portion (11B). A wire harness (61) is routed to extend vertically through the recessed portion (11G).

## Description

### [Technical Field]

The present invention relates to an electric vehicle.

### [Background Art]

Patent Literature 1 describes an electric drive vehicle structure in which left and right front side frames that extend in a vehicle front-rear direction are provided at both left and right sides in a motor room disposed at a vehicle front portion, a cross member that extends in a vehicle width direction spans between the left and right front side frames, an inverter that boosts and outputs inputted electricity, and a junction box that accommodates an electric distribution circuit including a relay are placed on an upper portion of the cross member by being stacked vertically, and a vehicle driving motor that is supplied with electricity by a harness from the junction box is suspended at a lower portion of the cross member, wherein a casing of the inverter is placed on an upper surface of the cross member, a casing of the junction box is placed on an upper surface of the casing of the inverter, an inlet/outlet port of coolant is provided on a vehicle front side of the inverter casing, a connection portion of a three-phase cable is provided at a vehicle rear side of the junction box casing, and the three-phase cable is bent and suspended in an arc shape in vehicle side view from the connection portion and connected to the vehicle driving motor. In Patent Literature 1, a power supply cable connection portion for connecting the power supply cable that is routed toward the front of the vehicle from the battery disposed at the vehicle rear portion is provided at a vehicle rear side of the junction box casing.

### [Citation List]

### [Patent Literature]

[Patent Literature 1] JP2019-51888A

### [Summary of Invention]

### [Technical Problem]

Here, it is considered that during a front-end collision of the vehicle, the motor and the junction box are pushed rearward by a collision load, the wire harness extending rearward from the junction box is caught between the motor and a dash panel, and the wire harness may be damaged.

However, the one described in Patent Literature 1 has a problem that it does not consider the case in which the wire harness is caught between the motor and the dash panel and is damaged during a front-end collision of the vehicle and cannot protect the wire harness during a front-end collision of the vehicle.

Thus, it is an object of the present invention to provide an electric vehicle that can protect a wire harness during a front-end collision of the vehicle.

### [Solution to Problem]

In order to solve the above-described problem, the present invention provides an electric vehicle including: a driving device that is disposed in a motor room in front of a dash panel and generates motor torque for traveling; a junction box that is disposed above the driving device; a high-voltage battery disposed below a floor panel behind the dash panel; and a wire harness that is coupled to a rear portion of the junction box and to the high-voltage battery, and characterized in that the driving device includes a driving case, the driving case having a motor accommodation portion that accommodates a motor generator and an inverter accommodation portion that accommodates an inverter disposed above the motor generator, the driving case has a pair of protruding portions on a left and right that protrude to a rear of a vehicle, and a recessed portion between the pair of protruding portions, at a rear edge portion of the inverter accommodation portion, and the wire harness is routed to extend vertically through the recessed portion.

### [Advantageous Effect of Invention]

As above, according to the present invention, it is possible to provide an electric vehicle that can protect a wire harness during a front-end collision of the vehicle.

### [Brief Description of Drawings]

[Figure 1] Figure 1 is a plan view of a driving device, an electricity supply unit, and a junction box of an electric vehicle according to one embodiment of the present invention.
[Figure 2] Figure 2 is a rear view of the driving device, the electricity supply unit, and the junction box of the electric vehicle according to one embodiment of the present invention.
[Figure 3] Figure 3 is a plan view of the driving device of the electric vehicle according to one embodiment of the present invention.
[Figure 4] Figure 4 is a right side view of the driving device of the electric vehicle according to one embodiment of the present invention.
[Figure 5] Figure 5 is a rear view of the driving device of the electric vehicle according to one embodiment of the present invention.
[Figure 6] Figure 6 is a perspective view of the driving device of the electric vehicle according to one embodiment of the present invention.
[Figure 7] Figure 7 is a perspective view of the junction box of the electric vehicle according to one embodiment of the present invention.

### [Description of Embodiment]

An electric vehicle according to one embodiment of the present invention is an electric vehicle including: a driving device that is disposed in a motor room in front of a dash panel and generates motor torque for traveling; a junction box that is disposed above the driving device; a high-voltage battery disposed below a floor panel behind the dash panel; and a wire harness that is coupled to a rear portion of the junction box and to the high-voltage battery, and characterized in that the driving device includes a driving case, the driving case having a motor accommodation portion that accommodates a motor generator and an inverter accommodation portion that accommodates an inverter disposed above the motor generator, the driving case has a pair of protruding portions on a left and right that protrude to a rear of a vehicle and a recessed portion between the pair of protruding portions, at a rear edge portion of the inverter accommodation portion, and the wire harness is routed to extend vertically through the recessed portion. Accordingly, the electric vehicle according to the one embodiment of the present invention can protect the wire harness during a front-end collision of the vehicle.

### [Embodiment]

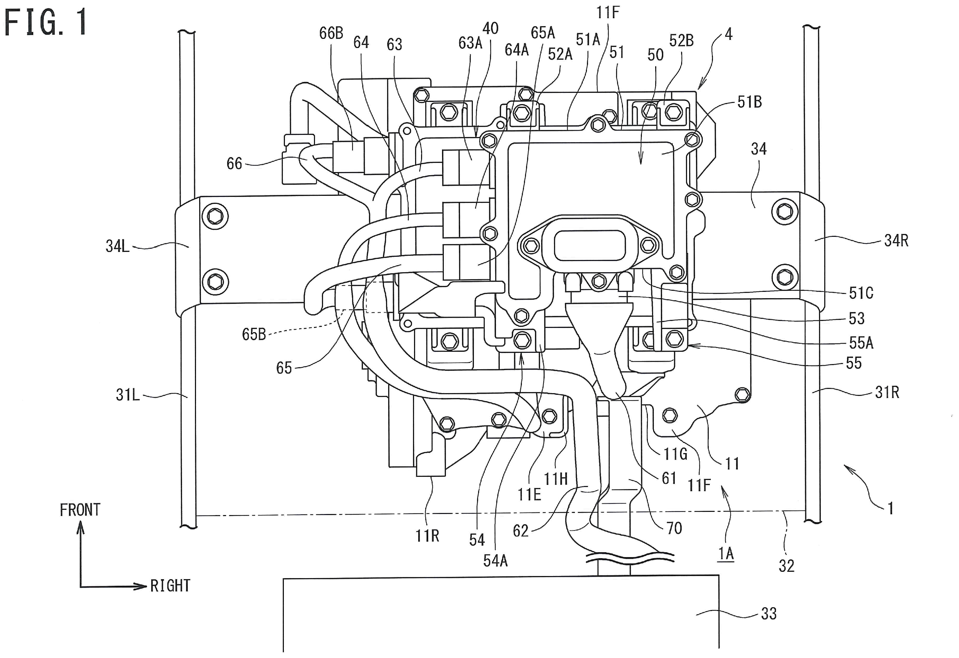

Hereinafter, an electric vehicle according to one embodiment of the present invention will be described by using the drawings. Figure 1 to Figure 7 are views showing the electric vehicle according to one embodiment of the present invention.

In Figure 1 to Figure 7, up-down, front-rear, and left-right directions are defined based on the electric vehicle, a front-rear direction of the vehicle is defined as a front-rear direction, a left-right direction (vehicle width direction) of the vehicle is defined as a left-right direction, and an up-down direction (height direction of the vehicle) of the vehicle is defined as an up-down direction.

As shown in Figure 1, a motor room 1A is formed in front of a dash panel 32 at a front portion of a vehicle 1. A cabin (vehicle compartment) not shown is provided behind the dash panel 32. The dash panel 32 extends in the up-down direction and separates the motor room 1A from the cabin.

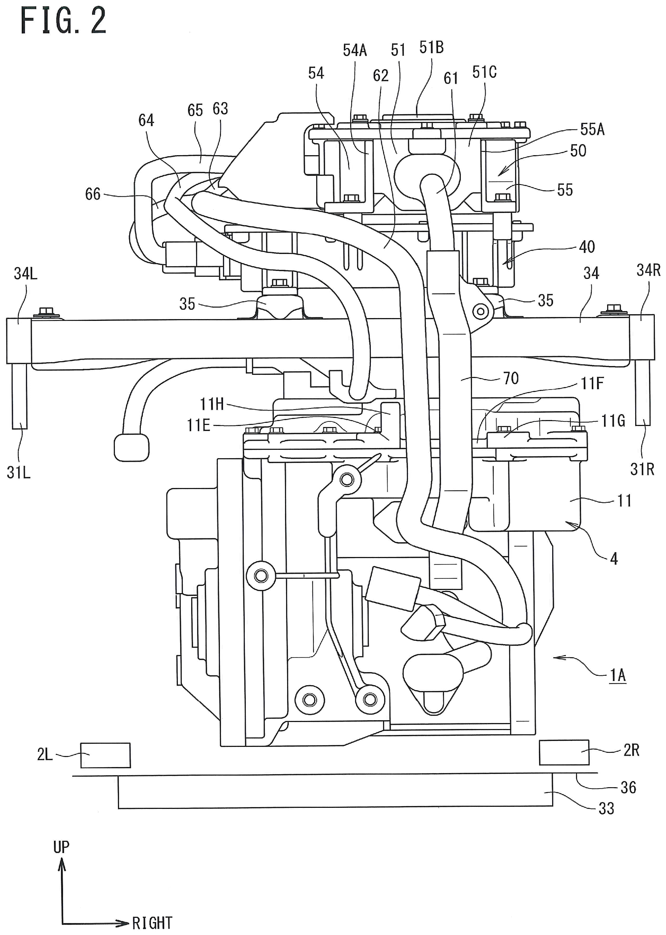

As shown in Figure 1 and Figure 2, in the motor room 1A, a driving device 4 that generates motor torque for traveling is provided. The driving device 4 is disposed horizontally in the motor room 1A such that a motor output shaft not illustrated in an inside thereof extends in the vehicle width direction. The vehicle 1 of the present embodiment configures an electric vehicle in the present invention.

A pair of side members 31L and 31R on the left and right are provided on a left side and a right side of the driving device 4. The side members 31L and 31R face the driving device 4 in the vehicle width direction and extend in a vehicle front-rear direction. The side members 31L and 31R are coupled to both end portions in the vehicle width direction of the cabin and compose part of a skeleton structure of the vehicle 1.

The vehicle 1 includes a support frame 34. The support frame 34 extends in the vehicle width direction over the driving device 4. End portions 34L and 34R in the vehicle width direction of the support frame 34 are respectively connected to upper portions of the side members 31L and 31R.

The vehicle 1 includes a plurality of wire harnesses 61, 62, 63, 64, 65, and 66. These wire harnesses 61, 62, 63, 64, 65, and 66 are made of copper wire with a large allowable current covered with an insulating coating and a flexible outer sheath and electrically connect a plurality of connection targets.

An electricity supply unit 40 and a junction box 50 are disposed above the driving device 4. In detail, above the electricity supply unit 40, the junction box 50 is disposed to be aligned with it, with a space between them.

The electricity supply unit 40 is composed of an ESU (Electric Supply Unit) that supplies electricity to the driving device 4. The electricity supply unit 40 is supported on an upper portion of the support frame 34 via brackets 35. The brackets 35 connect vicinities of a left end portion and a right end portion of a lower surface of the electricity supply unit 40 and an upper surface of the support frame 34.

The electricity supply unit 40 is formed in a box shape having six surfaces as a whole. The wire harness 66 is connected to a vicinity of a front end portion of a left side surface of the electricity supply unit 40. The wire harness 65 is connected to a vicinity of a rear end portion of the left side surface of the electricity supply unit 40.

The junction box 50 is coupled to the upper portion of the electricity supply unit 40 via a gap. The junction box 50 interconnects the wire harnesses 61, 63, 64, and 65. The junction box 50 is formed in a box shape having six surfaces as a whole.

The wire harness 61 is connected to a rear portion of the junction box 50. The wire harness 61 extends downward and rearward along a rear surface of the electricity supply unit 40 and a rear surface of the driving device 4. A rear end of the wire harness 61 is coupled to a front portion of a high-voltage battery 33.

A protection member 70 is provided on a rear surface of the wire harness 61. The protection member 70 is provided from a position behind the electricity supply unit 40 in the rear surface of the wire harness 61 to a position behind the upper portion of the driving device 4, in a height direction of the vehicle 1.

In a vicinity of a front end portion of a left side surface of the junction box 50, a wire harness connection portion 63A is provided, and the wire harness 63 is connected to this wire harness connection portion 63A.

In a vicinity of a rear end portion of the left side surface of the junction box 50, a second wire harness connection portion 65A is provided, and the wire harness 65 is connected to this wire harness connection portion 65A.

At a position between the wire harness 63 and the wire harness 65 in the left side surface of the junction box 50, a wire harness connection portion 64A is provided, and the wire harness 64 is connected to this wire harness connection portion 64A.

In this manner, to the left side surface of the junction box 50, the wire harnesses 63, 64, and 65 are connected in order from the front. The wire harness 63 and the wire harness 66 branch off from the wire harness 62 on the left of the junction box 50.

In the vicinity of the front end portion of the left side surface of the electricity supply unit 40, a wire harness connection portion 66B is provided, and the wire harness 66 is connected to this wire harness connection portion 66B.

In the vicinity of the rear end portion of the left side surface of the electricity supply unit 40, a first wire harness connection portion 65B is provided, and the wire harness 65 is connected to this first wire harness connection portion 65B.

The vehicle 1 includes the high-voltage battery 33. The high-voltage battery 33 is disposed below a floor panel 36 behind the dash panel 32. The floor panel 36 forms a floor surface of the cabin.

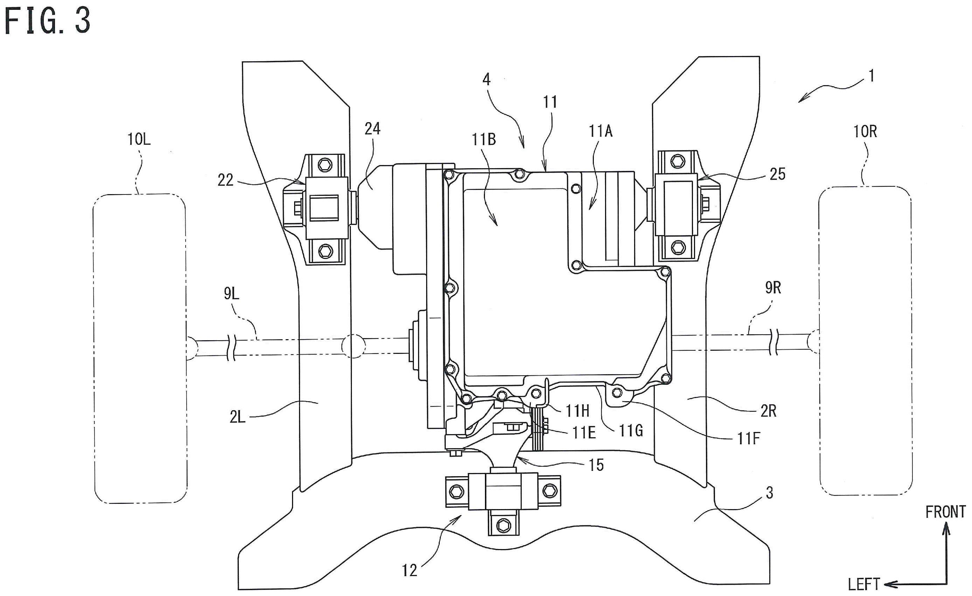

As shown in Figure 3, the vehicle 1 includes subframes 2L and 2R, and a cross member 3. The subframes 2L and 2R and the cross member 3 are disposed more downward than the side members 31L and 31R (see Figure 2). The subframes 2L and 2R and the cross member 3 support the driving device 4 from below.

The subframe 2L and the subframe 2R are disposed to be spaced apart in the vehicle width direction and extend in the front-rear direction. The vehicle width direction is the left-right direction. The cross member 3 extends in the vehicle width direction, and left and right end portions are connected to the subframe 2L and the subframe 2R.

The driving device 4 is disposed in a space surrounded by the subframes 2L and 2R and the cross member 3.

The driving device 4 is disposed between the subframe 2L and the subframe 2R in the vehicle width direction and is disposed in front of the cross member 3 in the front-rear direction, in the front portion of the vehicle 1.

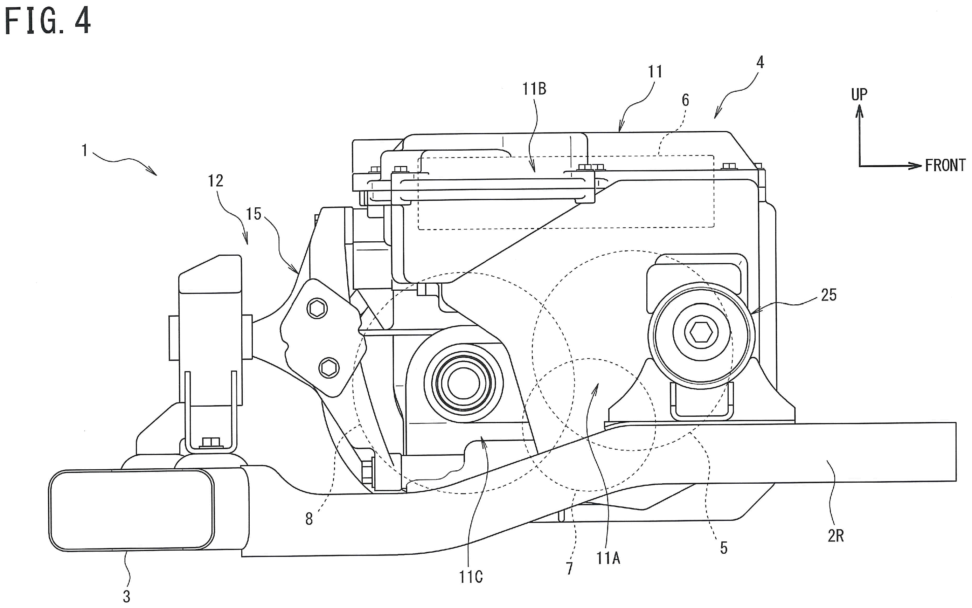

As shown by imaginary lines in Figure 4, the driving device 4 has a motor generator 5, an inverter 6 that controls electricity to be supplied to the motor generator 5, a speed reducer 7 that reduces a driving force (rotational speed) of the motor generator, and a differential device 8 that transmits power of the speed reducer 7 to left and right front wheels 10L and 10R (see Figure 3) via a left drive shaft 9L and a right drive shaft 9R (see Figure 3).

In other words, the driving device 4 transmits the driving force to the left and right front wheels 10L and 10R.

The driving device 4 has a driving case 11, and the motor generator 5, the inverter 6, the speed reducer 7, and the differential device 8 are accommodated in the driving case 11.

The motor generator 5 has a function as an electric motor that is driven by electricity supplied from the high-voltage battery 33 via the inverter 6, and a function as a generator that generates electricity by a reverse driving force that is inputted from the differential device 8.

The inverter 6 converts a direct-current electric power supplied from the high-voltage battery 33 into a three-phase alternating-current electric power to supply the three-phase alternating-current electric power to the motor generator 5, and converts a three-phase alternating-current electric power generated by the motor generator 5 into a direct-current electric power to charge the high-voltage battery 33. The high-voltage battery 33 is composed of, for example, a secondary battery such as a lithium-ion battery.

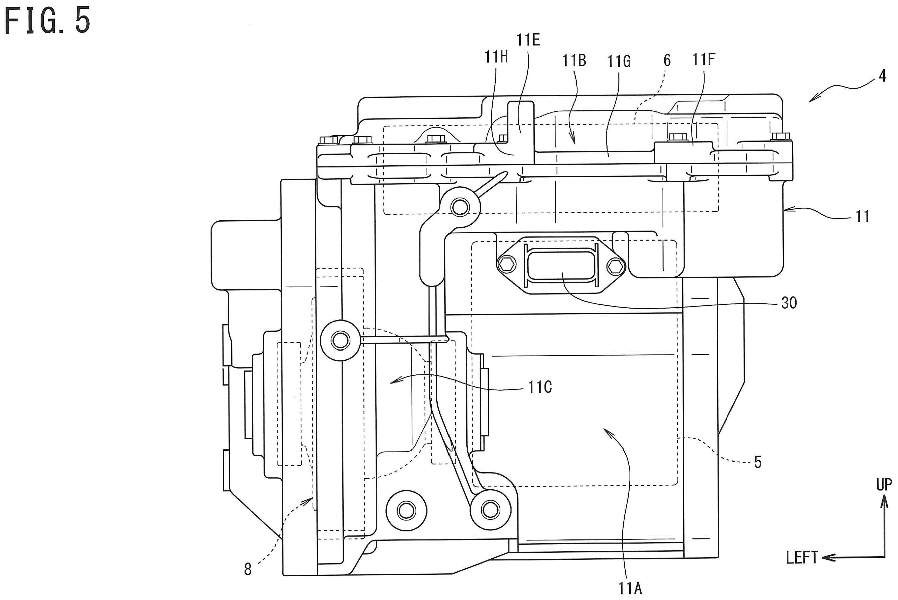

As shown in Figure 4, the differential device 8 is disposed behind the motor generator 5, and the inverter 6 is disposed above the motor generator 5 and the differential device 8 (see Figure 5).

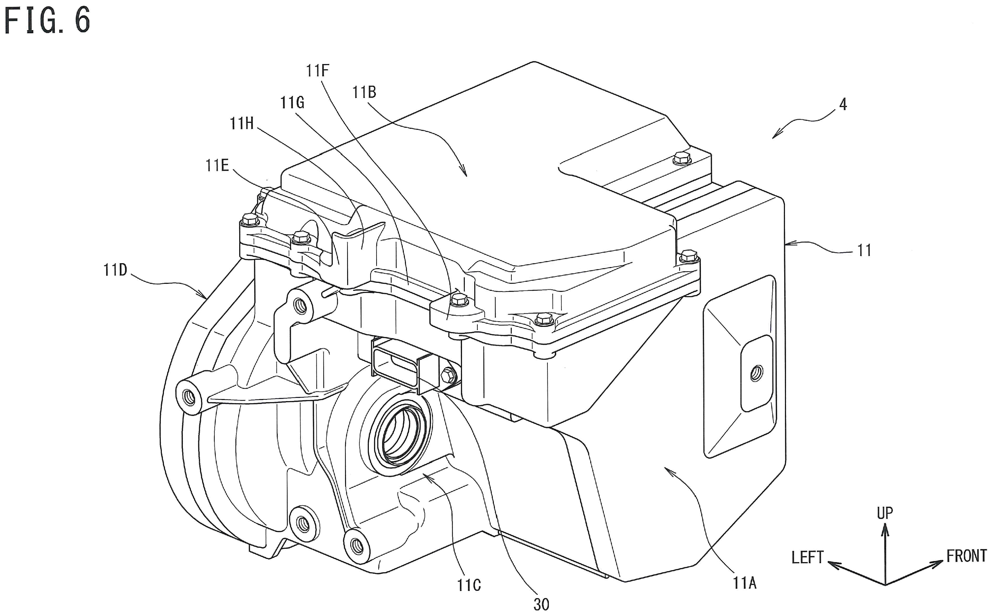

As shown in Figure 6, the driving case 11 includes a motor accommodation portion 11A in which the motor generator 5 and the speed reducer 7 are accommodated, an inverter accommodation portion 11B in which the inverter 6 is accommodated, and a differential accommodation portion 11C in which the differential device 8 is accommodated.

The inverter accommodation portion 11B is formed of an entire upper portion of the driving case 11. The inverter accommodation portion 11B is disposed above the motor accommodation portion 11A and the differential accommodation portion 11C. The differential accommodation portion 11C bulges rearward from the motor accommodation portion 11A.

The differential accommodation portion 11C is disposed to a left side (one side in the vehicle width direction) with respect to the motor accommodation portion 11A, and the differential device 8 is disposed on the left side with respect to the motor generator 5 (see Figure 5).

A length in the vehicle width direction of the differential accommodation portion 11C is formed to be shorter than a length in the vehicle width direction of the motor accommodation portion 11A. That is, the differential accommodation portion 11C is formed with a thickness in the vehicle width direction thinner than the motor accommodation portion 11A.

The inverter accommodation portion 11B bulges rearward with respect to the motor accommodation portion 11A. A rear wall portion of a portion on a left side of the inverter accommodation portion 11B is disposed to the left side with respect to the motor accommodation portion 11A.

The portion on the left side of the inverter accommodation portion 11B and the differential accommodation portion 11C that bulge rearward from the motor accommodation portion 11A form a bulging accommodation portion 11D, and in the bulging accommodation portion 11D, the differential device 8 and a part (rear portion on the left side) of the inverter 6 are accommodated.

In a rear portion of the vehicle 1, a driving source, left and right drive shafts on the rear side to which power of the driving source is transmitted and left and right rear wheels, each of which is not illustrated, are disposed.

The vehicle 1 of the present embodiment travels in a two-wheel driving mode by only the driving device 4 on the front side being driven, and travels in a four-wheel driving mode by both the driving device 4 and the driving source being driven. The driving source on the rear side is not particularly limited.

Furthermore, the driving device 4 on the front side may use an internal combustion engine and a motor as the driving source instead of using the motor as the driving source as in the present embodiment.

As shown in Figure 3 and Figure 4, a rear portion of the driving case 11, that is, a rear wall portion of the inverter accommodation portion 11B, and a rear wall portion of the differential accommodation portion 11C, is elastically supported on the cross member 3 by a rear mount device 12.

The rear mount device 12 has a mount bracket 15. The mount bracket 15 is fastened to the inverter accommodation portion 11B, in which the inverter 6 is accommodated, and to the differential accommodation portion 11C, in which the differential device 8 is accommodated.

As shown in Figure 4, the inverter 6 and the differential device 8 are disposed via a gap in the up-down direction.

As shown in Figure 3 and Figure 4, the mount bracket 15 is fastened to the inverter accommodation portion 11B, in which the inverter 6 is accommodated, and to the differential accommodation portion 11C, in which the differential device 8 is accommodated.

As shown in Figure 3, the driving case 11 is elastically supported on the subframe 2L by a left mount device 22. The driving case 11 is elastically supported on the subframe 2R by a right mount device 25.

The left mount device 22 includes a mount bracket 24 that is connected to the driving case 11. The driving case 11 is coupled to the left mount device 22 via the mount bracket 24. The right mount device 25 is directly coupled to the driving case 11.

In this manner, the driving device 4 is elastically supported on the subframes 2L and 2R and the cross member 3 to be placed on the subframes 2L and 2R and the cross member 3 by the rear mount device 12, the left mount device 22, and the right mount device 25.

As shown in Figure 5 and Figure 6, an inverter connector 30 is provided at a rear wall portion of the motor accommodation portion 11A. One end portion of a wire harness not illustrated is connected to the inverter connector 30. Another end portion of the wire harness is connected to, for example, a low-voltage battery not illustrated.

The inverter connector 30 is connected to the inverter 6 via a wire harness not illustrated, and electricity of the low-voltage battery is supplied to the inverter 6. Note that the inverter connector 30 may be connected to an auxiliary battery or the like.

As shown in Figure 1 and Figure 6, the driving case 11 has a pair of protruding portions 11E and 11F on the left and right that protrude towards the rear of the vehicle, and a recessed portion 11G between the pair of protruding portions 11E and 11F, at a rear edge portion of the inverter accommodation portion 11B. The wire harness 61 is routed to extend vertically through the recessed portion 11G between the pair of protruding portions 11E and 11F. Furthermore, the wire harness 62 is disposed on the left of the wire harness 61 inside the recessed portion 11G between the pair of protruding portions 11E and 11F. The wire harness 62 is routed to extend vertically through the recessed portion 11G.

Here, the inverter accommodation portion 11B has a split structure in which an upper part and a lower part thereof are separated by split surfaces. The inverter accommodation portion 11B has a flange portion that brings split surfaces of the upper part and the lower part thereof into surface contact with each other and couples them by bolt fastening. The flange portion is formed to be thick to secure rigidity. The protruding portions 11E and 11F are formed of portions made by protruding parts of rear edge portions of the flange portions to the rear of the vehicle, and have high rigidity.

The driving case 11 has a rib 11H that extends upward and forward from at least one of the pair of protruding portions 11E and 11F. The rib 11H faces the wire harness 61 in the vehicle width direction. A rear end portion of the rib 11H is bent in a direction away from the wire harness 61 in the vehicle width direction. By providing the rib 11H on at least one of the protruding portions 11E and 11F in this manner, the rib 11H extending upward from the protruding portion 11E or 11F is brought into surface contact with the wire harness 61 when the wire harness 61 passing through the recessed portion 11G contacts the protruding portion 11E or 11F, and therefore a local load is prevented from acting on the wire harness 61. Furthermore, it is preferable to provide the rib 11H on the protruding portion 11E on the left. By providing the rib 11H on the protruding portion 11E on the left, this rib 11H can function as a guide that prevents tilt (displacement) to the left of the wire harness 62, and the wire harnesses 63 and 66 that branch from the wire harness 62 are prevented from being displaced to the left and subjected to large tension and bending loads.

In the present embodiment, the rib 11H extends upward and forward from the protruding portion 11E, and faces the wire harness 61 in the vehicle width direction on the left of the wire harness 61. Furthermore, a rear end portion of the rib 11H is bent away from the wire harness 61 to the left.

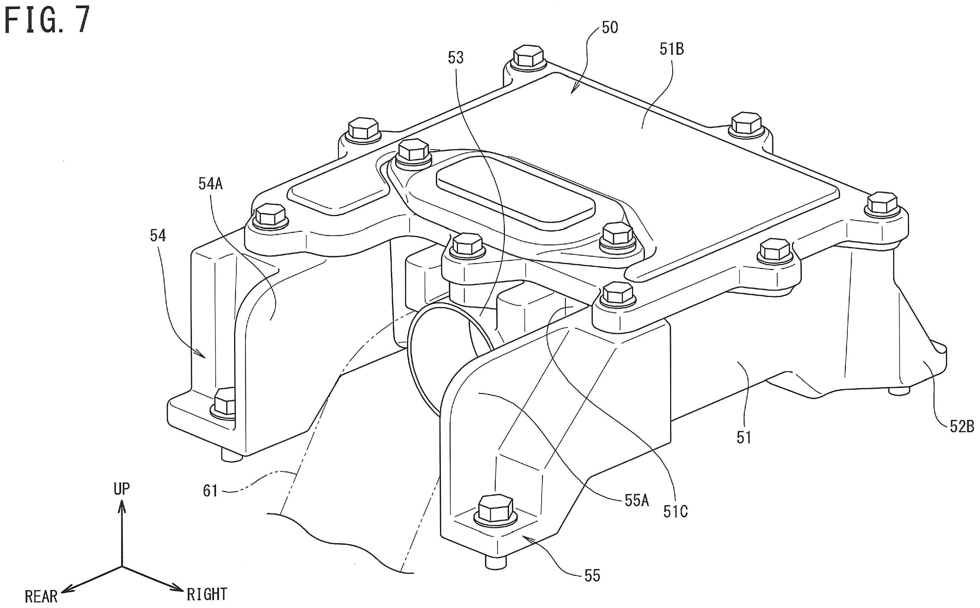

As shown in Figure 1 and Figure 7, the junction box 50 is disposed between a front end portion 11F and a rear end portion 11R of the driving case 11 in the vehicle front-rear direction.

The junction box 50 has a box-shaped body portion 51, and a pair of leg portions 52A and 52B on the left and right that couple the body portion 51 to the electricity supply unit 40.

The leg portions 52A and 52B protrude forward and downward from both end portions in the vehicle width direction of a front surface 51A of the body portion 51.

The junction box 50 has a lid member 51B that closes the body portion 51 from above. A front end of the lid member 51B protrudes more forward than the front surface 51A of the body portion 51.

A rear connection portion 53 to which the wire harness 61 is connected from behind, and a pair of protrusion portions 54 and 55 that protrude to the rear of the vehicle in both side portions in the vehicle width direction of the rear connection portion 53 are provided at the rear portion of the junction box 50.

The rear connection portion 53 is provided on a rear surface 51C of the body portion 51. The wire harness 61 extends downward through a space between the pair of protrusion portions 54 and 55 from the rear connection portion 53.

The rear connection portion 53 is disposed at a position in front of the recessed portion 11G in the vehicle front-rear direction, and at a same position as the recessed portion 11G in the vehicle width direction.

The driving case 11 and the junction box 50 are disposed such that the pair of protruding portions 11E and 11F are positioned between the pair of protrusion portions 54 and 55, in the vehicle width direction.

The pair of protrusion portions 54 and 55 protrude more rearward than a rear end of the electricity supply unit 40. The pair of protrusion portions 54 and 55 have vertical walls 54A and 55A extending in the up-down direction and the front-rear direction. The vertical walls 54A and 55A are provided at positions that are close to the rear connection portion 53 in the protrusion portions 54 and 55, in the vehicle width direction.

A front end of an upper surface of the electricity supply unit 40 protrudes more forward than the front surface 51A of the body portion 51.

As described above, in the present embodiment, the driving device 4 includes the driving case 11 having the motor accommodation portion 11A that accommodates the motor generator 5, and the inverter accommodation portion 11B that accommodates the inverter 6 disposed above the motor generator 5. The driving case 11 has the pair of protruding portions 11E and 11F that protrude to the rear of the vehicle, and the recessed portion 11G between the pair of protruding portions 11E and 11F, at the rear edge portion of the inverter accommodation portion 11B. The wire harness 61 is routed to extend vertically through the recessed portion 11G.

Accordingly, the wire harness 61 coupled to the junction box 50 can be routed to extend downward through the recessed portion 11G between the pair of protruding portions 11E and 11F. Consequently, since the pair of protruding portions 11E and 11F of the driving device 4 abuts on the dash panel 32 during a front-end collision of the vehicle, and the wire harness 61 that passes through the recessed portion 11G between the protruding portions 11E and 11F does not abut on the dash panel 32, it is possible to prevent the wire harness 61 from being caught between the driving device 4 and the dash panel 32. As a result, it is possible to protect the wire harness 61 during a front-end collision of the vehicle.

Furthermore, in the present embodiment, the driving case 11 has the rib 11H that extends upward and forward from at least one of the pair of protruding portions 11E and 11F, and the rib 11H faces the wire harness 61 in the vehicle width direction.

Accordingly, since the rib 11H extending upward from the protruding portion 11E or 11F is brought into surface contact with the wire harness 61 when the wire harness 61 passing through the recessed portion 11G contacts the protruding portion 11E or 11F, it is possible to prevent a local load from acting on the wire harness 61. Furthermore, it is preferable to provide the rib 11H on the protruding portion 11E on the left. By providing the rib 11H on the protruding portion 11E on the left, this rib 11H can function as the guide that prevents tilt (displacement) to the left of the wire harness 62, and can prevent the wire harnesses 63 and 66 that branch from the wire harness 62 from being displaced to the left and subjected to large tension and bending loads.

Furthermore, in the present embodiment, the rear end portion of the rib 11H is bent in the direction away from the wire harness 61 in the vehicle width direction.

Accordingly, when the wire harness 61 that passes through the recessed portion 11G contacts the rib 11H, it is possible to prevent a local load from acting on the wire harness 61, as a result of the rib 11H being bent.

Furthermore, in the present embodiment, the rear connection portion 53 to which the wire harness 61 is connected from behind is provided at the rear portion of the junction box 50, and the rear connection portion 53 is disposed at the position in front of the recessed portion 11G in the vehicle front-rear direction, and at the same position as the recessed portion 11G in the vehicle width direction.

Accordingly, the wire harness 61 is routed to gradually bend downward from the rear connection portion 53 of the junction box 50 to extend downward, extend rearward while maintaining a same position in the vehicle width direction and pass through the recessed portion 11G of the driving case 11. Consequently, it is possible to increase a radius of curvature during routing of the wire harness 61, and it is possible to improve durability of the wire harness 61.

Furthermore, in the present embodiment, the pair of protrusion portions 54 and 55 that protrude to the rear of the vehicle are provided in both the side portions in the vehicle width direction of the rear connection portion 53. The driving case 11 and the junction box 50 are disposed such that the pair of protruding portions 11E and 11F are positioned between the pair of protrusion portions 54 and 55, in the vehicle width direction.

Accordingly, since the wire harness 61 is routed to pass through the space between the pair of protruding portions 11E and 11F, and the pair of protrusion portions 54 and 55, it is possible to more reliably prevent the wire harness 61 from being caught between the dashboard and the driving device 4 during a front-end collision of the vehicle.

Furthermore, in the present embodiment, the junction box 50 is disposed between the front end portion 11F and the rear end portion 11R of the driving case 11 in the vehicle front-rear direction.

Accordingly, since the driving case 11 can receive the collision loads during a front-end collision of the vehicle, and the collision loads are restrained from directly acting on the junction box 50, it is possible to restrain movement to the rear of the wire harness 61 caused by the junction box 50 being pushed rearward, and it is possible to protect the wire harness 61 during a front-end collision of the vehicle.

Furthermore, in the present embodiment, the vehicle 1 includes the subframes 2L and 2R that support the driving device 4 from below, the pair of side members 31L and 31R on the left and right that extend in the vehicle front-rear direction at the position facing the driving device 4 in the vehicle width direction, and the support frame 34 that passes above the driving device 4 to extend in the vehicle width direction and is connected to the pair of side members 31L and 31R. The electricity supply unit that supplies electricity is supported on the upper portion of the support frame 34 via the bracket 35, and the junction box 50 is coupled to the upper portion of the electricity supply unit.

Accordingly, the junction box 50 is not directly fixed to the upper portion of the driving device 4, the driving device 4 is supported by the subframes 2L and 2R, and the junction box 50 is supported on the side members 31L and 31R via the electricity supply unit, the bracket 35, and the support frame 34. Consequently, it is possible to restrain an impact received by the driving device 4 during a front-end collision of the vehicle from acting on the junction box 50, and the junction box 50 from being displaced rearward, and it is possible to restrain an impact from being exerted on the wire harness 61 connected to the junction box 50, and the wire harness 61 from being displaced rearward. As a result, it is possible to protect the wire harness 61 during a front-end collision of the vehicle.

Although the embodiment of the present invention is disclosed, it is obvious to those skilled in the art that modifications can be added without departing from the scope of the present invention. All such modifications and equivalents are intended to be encompassed by the following claims.

### [Reference Signs List]

1 vehicle (electric vehicle), 1A motor room, 2L, 2R subframe, 4 driving device, 5 motor generator, 6 inverter, 11 driving case, 11A motor accommodation portion, 11B inverter accommodation portion, 11E, 11F protruding portion, 11G recessed portion, 11H rib, 31L, 31R side member, 32 dash panel, 33 high-voltage battery, 34 support frame, 35 bracket, 36 floor panel, 40 electricity supply unit, 50 junction box, 51 body portion, 51A front surface, 51B lid member, 52A leg portion, 53 rear connection portion, 54, 55 protrusion portion, 54A, 55A vertical wall, 61 wire harness

## Claims

1. An electric vehicle comprising:
a driving device (4) that is disposed in a motor room (1A) in front of a dash panel (32) and generates motor torque for traveling;
a junction box (50) that is disposed above the driving device (4);
a high-voltage battery (33) disposed below a floor panel (36) behind the dash panel (32); and
a wire harness (61) that is coupled to a rear portion of the junction box (50) and to the high-voltage battery (33), **characterized in that**
the driving device (4) includes a driving case (11), the driving case (11) having a motor accommodation portion (11A) that accommodates a motor generator (5) and an inverter accommodation portion (11B) that accommodates an inverter (6) disposed above the motor generator (5),
the driving case (11) has a pair of protruding portions (11E, 11F) on a left and right that protrude to a rear of a vehicle (1) and a recessed portion (11G) between the pair of protruding portions (11E, 11F), at a rear edge portion of the inverter accommodation portion (11B), and
the wire harness (61) is routed to extend vertically through the recessed portion (11G).

2. The electric vehicle as claimed in claim 1, wherein
the driving case (11) has a rib (11H) that extends upward and forward from at least one of the pair of protruding portions (11E, 11F), and
the rib (11H) faces the wire harness (61) in a vehicle width direction.

3. The electric vehicle as claimed in claim 2, wherein
a rear end portion of the rib (11H) is bent in a direction away from the wire harness (61) in the vehicle width direction.

4. The electric vehicle as claimed in claim 1, wherein
a rear connection portion (53) to which the wire harness (61) is connected from behind is provided at the rear portion of the junction box (50), and
the rear connection portion (53) is disposed at a position in front of the recessed portion (11G) in a vehicle front-rear direction, and at a same position as the recessed portion (11G) in a vehicle width direction.

5. The electric vehicle as claimed in claim 4, wherein
a pair of protrusion portions (54, 55) that protrude to the rear of the vehicle in both side portions in the vehicle width direction of the rear connection portion (53) are provided at the rear portion of the junction box (50), and
the driving case (11) and the junction box (50) are disposed such that the pair of protruding portions (11E, 11F) are positioned between the pair of protrusion portions (54, 55) in the vehicle width direction.

6. The electric vehicle as claimed in claim 5, wherein the junction box (50) is disposed between a front end portion (11F) and a rear end portion (11R) of the driving case (11) in the vehicle front-rear direction.

7. The electric vehicle as claimed in claim 2, wherein the electric vehicle comprises:
subframes (2L, 2R) that support the driving device (4) from below;
a pair of side members (31L, 31R) on the left and right that extend in a vehicle front-rear direction at positions facing the driving device (4) in the vehicle width direction; and
a support frame (34) that passes above the driving device (4) to extend in the vehicle width direction and is connected to the pair of side members (31L, 31R), and
an electricity supply unit (40) that supplies electricity is supported on an upper portion of the support frame (34) via a bracket (35), and
the junction box (50) is coupled to an upper portion of the electricity supply unit (40).
